# EUROPÄISCHE PATENTSCHRIFT

(11) **EP 0 641 294 B1**
(45) Veröffentlichungstag und Bekanntmachung des Hinweises auf die Patenterteilung: **27.12.1996**
(21) Anmeldenummer: 93909945.3
(22) Anmeldetag: 11.05.1993
(51) Int. Cl.: C02F 1/52, C02F 1/56, C02F 1/54, C09D 7/00

(54) **VERFAHREN ZUR ENTKLEBUNG UND KOAGULATION VON LACKEN**
PROCESS FOR DETACHING AND COAGULATING PAINTS
PROCEDE DE DECOLLAGE ET DE COAGULATION DE PEINTURES

(30) Priorität: 18.05.1992 DE 4216352
(43) Veröffentlichungstag der Anmeldung: 08.03.1995
(73) Patentinhaber: Henkel Kommanditgesellschaft auf Aktien, 40191 Düsseldorf (DE)
(72) Erfinder: MOLZ, Thomas, D-4010 Hilden (DE); REHM, Hans-Jörgen, D-4010 Hilden (DE); VOGT, Toni, D-4150 Krefeld (DE); GEKE, Jürgen, D-4000 Düsseldorf 1 (DE)
(86) Internationale Anmeldenummer: EP9301154
(87) Internationale Veröffentlichungsnummer: WO9323337

(56) Entgegenhaltungen:
- EP-A- 0 117 586
- EP-A- 0 168 625
- EP-A- 0 193 668
- DE-A- 3 412 763
- DE-A- 3 810 166
- US-A- 4 504 395
- US-A- 4 541 931
- US-A- 4 564 464

## Beschreibung

Die Erfindung betrifft ein Verfahren zur Entklebung und Koagulation von Lacken und sonstigen organischen Beschichtungsmitteln, insbesondere von Systemen auf Wasserbasis, sogenannten "Wasserlacken", in Umlaufwässern von Naßabscheidern für Spritzlackieranlagen, insbesondere derartiger Anlagen mit Teilstromentsorgung.

Bei der Applikation von Lacken oder sonstigen organischen Beschichtungsmitteln auf metallische Oberflächen oder Kunststoffoberflächen, z.B. in der Automobilindustrie, gelingt es nicht, die Lacke bzw. Beschichtungsmittel restlos auf die zu beschichtenden Teile aufzubringen. Speziell bei der Lackierung von Kraftfahrzeug-Karosserien fällt in den Lackspritzkabinen sogenannter "Overspray" an, der mittels Wasser aufgenommen und in sogenannte Systembecken gespült wird. Um einerseits die Funktion der wasserführenden Leitungs-, Düsen - und Berieselungssysteme durch klebende Lackpartikel nicht zu stören und andererseits das umlaufende Wasser von den aufgenommenen Inhaltsstoffen zu entsorgen, müssen dem Wasser zur Koagulierung der genannten Stoffe Mittel, sogenannte Koagulierungsmittel, zugegeben werden.

Zur Entklebung und Koagulierung herkömmlicher, vor allem in der Automobilindustrie verwendeter Lacke, steht eine Reihe von neutralen und alkalischen Produkten zur Verfügung.

In den aus dem Stand der Technik bekannten Verfahren zur Koagulation von Lacken und Beschichtungsmitteln hängt es weitgehend von den vorhandenen technischen Anlagen ab, ob entweder ein Lackkoagulierungsmittel verwendet wird, das das Koagulat im Beruhigungsbecken flotiert, d.h. zum Aufschwimmen bringt, oder ob ein Koaguliermittel verwendet wird, durch das das Koagulat sedimentiert. Im ersteren Fall ist ein Abschöpfen des Koagulats von der Wasseroberfläche möglich, während im letzteren Fall die sedimentierten Koagulate mittels eines Kratzbandes vom Beckenboden abgeräumt werden. Zunehmend kommen jedoch Lackentsorgungslinien zum Einsatz, in denen es erforderlich ist, die entklebten Lackpartikel im Umlaufwasser in einer gleichmäßigen Dispersion oder Suspension zu halten, ohne dabei den Lack auszufällen. Je nach Lackqualität und Lackart ist es somit erforderlich, das spezifische Verhalten der Lackpartikel im Einzelfall derart zu beeinflussen, daß zur Flotation oder Sedimentation neigende Lackpartikel eine gleichmäßige Dispersion oder Suspension bilden. Einen Überblick über die mit der Lackkoagulierung verbundenen Probleme gibt J. Geke in "Oberfläche + JOT", 1986, Heft 11, Seiten 43 bis 46.

Zur Koagulierung herkömmlicher, vor allem in der Automobilindustrie verwendeter Lacke steht eine Reihe unterschiedlicher Lackkoagulierungsmittel zur Verfügung. Um eine Koagulation und Entklebung der Lackpartikel und deren Agglomeration zu einem austragsfähigen Koagulat zu erreichen, wurden gemäß dem Stand der Technik dem umlaufenden Wasser pulverförmige oder flüssige, alkalische oder neutrale Produkte zugesetzt.

So werden in der GB-A-1 512 022 flockulierende, d.h. den Zusammenschluß von Teilchen unter Einwirkung intermolekularer brückenbildender Makromoleküle bewirkende Agenzien beschrieben. Diese setzen sich zusammen aus als Fällungsmittel wirkenden anorganischen Metallsalzen (Eisenchlorid oder Aluminiumsulfat) und organischen kationischen Polymeren, wie Polyvinylpyridin oder Polyaminen, in wäßriger Lösung.

Aus der DE-A-33 16 878 sind flüssige Einkomponenten-Koaguliermittel bekannt, die Calcium- und/oder Magnesium-Nitrate, -Chloride und/oder -Sulfate sowie Polyethylenimine enthalten, die durch Protonierung oder Alkylierung kationisch modifiziert sind.

Speziell die Entsorgung von Zweikomponenten-Polyurethanlacken bereitete in der Vergangenheit immer wieder Schwierigkeiten. Zur Entsorgung von Nebeln derartiger Lacke und Beschichtungsmaterialien wurden in der DE-A-34 12 763 Mittel vorgeschlagen, die Cyanamid und/oder Dicyandiamid und/oder Cyanamidsalze in Verbindung mit üblicherweise in derartigen Koaguliermitteln enthaltenen Stoffen enthalten.

In letzter Zeit finden zunehmend Schichtsilicate verschiedenster Art, wie Bentonite (US-A-42 20 456), Hectorite (EP-B-193 668), Montmorillonite (US-A-46 29 572), Kaoline (US-A-43 80 495) oder Smectite (US-A-47 01 220) Verwendung als Entklebungs- und Koaguliermittel für Lacke. Nach der DE-C-38 17 251 können auch andere Tonerde-Typen, insbesondere Böhmit oder Pseudoböhmit, als Lackentklebungs- und Sedimentationsmittel eingesetzt werden.

Aus der US-A-44 96 374 und der EP-A-117 586 ist weiterhin bekannt, daß man Talkum in Kombination mit Calciumoxid, -hydroxid, -carbonat und/oder Zinkstearat, zum Koagulieren und Abscheiden von High Solid-Lacken einsetzen kann. Weiterhin ist aus der DE-C-34 21 289 und der DE-C-27 58 873 bekannt, daß man Wachs, insbesondere Montanwachs oder Carnaubawachs, in Kombination mit Paraffinabkömmlingen zum Entkleben und Koagulieren von Kunstharzlackanteilen in Naßabscheidern von Spritzlackieranlagen einsetzen kann.

Aus der DE-A-38 10 166 sind ferner wäßrige Konzentrate bekannt, die ein Ethylen-Acrylsäure-Copolymerisat zur Koagulation von Lacken und anderen organischen Beschichtungsmitteln enthalten.

Als Wirkstoffe in Koaguliermitteln können auch die aus der DE-A-15 17 409 bekannten Alkalimetallsalze, wie Hydroxide, Carbonate und/oder Hydrogencarbonate eingesetzt werden.

Bedingt durch Lösungsmittelemissionen bei der Lackierung mit lösungsmittelhaltigen Lacken und aufgrund verschärfter gesetzlicher Bestimmungen für die Abluft aus Lackierbetrieben besteht ein Trend zu wasserbasierten Lacken. Die wasserlöslichen bzw. wasserdispergierbaren Bindemittel der vereinfacht als "Wasserlacke" bezeichneten Wasserbasislacke haben infolge der hydrophilen Gruppen in der Regel andere Koagulierungs- bzw. Flockungseigenschaften als Lösungsmittellacke. So können im allgemeinen wasserlösliche Bindemittel, deren Löslichkeit meist auf Carboxylatgruppen beruht, durch Reaktion mit mehrwertigen Kationen wie beispielsweise Calcium, Magnesium, Aluminium, Eisen (II) und Eisen (III) in wasserunlösliche Salze überführt werden, die aus den wäßrigen Lösungen ausflocken. Dementsprechend kann bereits ein Teil des wasserlöslichen Lackes durch die im Brauchwasser enthaltenden mehrwertigen Kationen ausgefällt werden. Dieser an sich bei der Koagulation in konventionellen Koagulieranlagen (für Flotation oder Sedimentation) vorteilhafte Effekt ist bei moderneren Anlagen mit Teilstromentsorgung von großem Nachteil. Die Koagulierung mit Teilstromentsorgung beruht nämlich darauf, daß die in das Umlaufwasser eingetragenen, entklebten Lackpartikel zunächst in Suspension verbleiben und erst in einem abgezweigten Teilstrom gezielt durch Zugabe von Flockungsmitteln ausgeflockt und entsorgt werden.

Üblicherweise werden heute im Stand der Technik für die Lackkoagulierung die oben genannten Produkte eingesetzt, die beispielsweise mit Alkalimetallcarbonaten aktivierte Bentonite enthalten. Diese sogenannten Aktivbentonite werden durch intensive Durchmischung natürlicher Calcium-Bentonite mit Alkalimetallsalzen hergestellt. Durch den intensiven Mischvorgang werden in den Gitterzwischenschichten der Schichtsilicate die Calciumionen gegen Alkalimetallionen ausgetauscht. Bei der Aufarbeitung verbleibt jedoch der gesamte Calciumgehalt im Bentonit. Bei Verwendung von derartig aktivierten Bentoniten für die Koagulation von Wasserlacken, insbesondere in Anlagen mit Teilstromentsorgung, kommt es daher infolge der Wasserhärte des Koagulierwassers zu einer unerwünschten, vorzeitigen Ausfällung eines mehr oder weniger großen Teils des wasserlöslichen Bindemittels in den Koagulierbecken. Daraus resultiert eine Beeinträchtigung der Betriebssicherheit, hohe Reinigungskosten und ein geringerer Koagulationsaustrag, insbesondere im Hinblick auf Lackrecycling/-verwertung.

Aufgabe der vorliegenden Erfindung war es daher, ein Verfahren zu entwickeln, welches nicht nur eine vollständige Entklebung und Koagulierung, insbesondere von Wasserlacken und anderen organischen Beschichtungsmitteln auf Wasserbasis bedingt, sondern vielmehr eine hinreichende Dispergierung oder Suspendierung der entklebten Lackpartikel im Umlaufwasser gewährleistet. Das vordringliche Ziel der vorliegenden Erfindung ist es mithin, die entklebten Lackpartikel im Umlaufwasser in der Schwebe zu halten. Zudem sollte dieses Verfahren insbesondere auch in modernen Anlagen mit Koagulatentsorgung in getrennten Flockungssystemen - beispielsweise den sogenannten "ESKA"-Anlagen - einsetzbar sein, in denen die entklebten Lackpartikel im Umlaufwasser nicht flotieren oder sedimentieren, sondern in Dispersion oder Suspension gehalten werden müssen. Darüber hinaus sollte dieses Verfahren auch zur Koagulierung und Entsorgung üblicher, auf Lösungsmittelbasis konfektionierter Lacksysteme anwendbar sein.

Dementsprechend betrifft die vorliegende Erfindung ein Verfahren zur Entklebung und Koagulierung von Lacken und sonstigen organischen Beschichtungsmitteln, insbesondere von Lacksystemen auf Wasserbasis ("Wasserlacken"), in Umlaufwässern von Naßabscheidern für Spritzlackieranlagen, wobei man dem Umlaufwasser an sich bekannte Lackkoaguliermittel zusetzt, dadurch gekennzeichnet, daß man die Wasserhärte des Umlaufwassers auf Werte im Bereich von 0 bis 1,0 mmol/l Erdalkalimetallionenäquivalente einstellt.

Überraschenderweise wurde nämlich gefunden, daß die Bildung dispergierfähiger, auf adsorptivem Wege entsorgbarer Lackreste dann möglich ist, wenn man die Wasserhärte des Umlaufwassers auf Werte im vorstehend genannten Bereich einstellt. Insbesondere läßt sich auf diese Weise eine frühzeitige, unerwünschte Ausfällung von Wasserlacken verringern oder sogar völlig vermeiden, ohne hierbei die Entklebung und Koagulierung des Lackoverspray in irgendeiner Weise negativ zu beeinflussen.

Im Sinne der vorliegenden Erfindung ist es bevorzugt, daß man die Wasserhärte des Umlaufwassers auf Werte im Bereich von 0 bis 0,2 mmol/l Erdalkalimetallionenäquivalente einstellt.

Bezüglich des verwendeten Begriffes "Wasserhärte" sei auf die einschlägige Literatur des Standes der Technik verwiesen, beispielsweise auf die betreffende Definition in "Römpp Chemie Lexikon", 9. Auflage, Band 3 (1990), Seiten 1698 bis 1700, Stichwort: "Härte des Wassers". Hiernach werden die Salze des Calciums und Magnesiums als die wichtigsten Härtebildner bezeichnet, die für die Wasserhärte die maßgebliche Rolle spielen. Ferner entsprechen hiernach 1 mmol/l Erdalkalimetall-Ionen ca. 5,6° d (Grad Deutscher Härte).

Im Rahmen des erfindungsgemäßen Verfahrens können beispielsweise die nachfolgend genannten, an sich bekannten Koagulierungsmittel Verwendung finden:

In den Koaguliermitteln können beispielsweise ein oder mehrere Alkalimetall-Schichtsilicat(e), beispielsweise die aus der Lehre der US-A-4 220 456, US-A-4 629 572, US-A-4 380 495 und US-A-4 701 220 sowie der europäischen Patentschrift EP-B-193 558 bekannten Verbindungen enthalten sein, die in bevorzugten Ausführungsformen aus der Gruppe der Bentonite, Hectorite, Montmorillonite und/oder Kaoline stammen.

Kombinationen von Bentonit und Kaolin oder von Bentonit und Hectorit in Koaguliermitteln weisen ein sehr vorteilhaftes Koagulationspotential auf. Mit Koaguliermitteln, die eine Kombination derartiger Schichtsilicate aufweisen, können Einkomponenten-Lacke, Polyesterlacke oder Einkomponenten-Polyurethanlacke mit hohem Feststoffanteil, auch in "High Solid-Qualität", die sonst nur unzureichend entklebt und koaguliert werden konnten, aus dem Umlaufwasser von Spritzkabinen restlos entsorgt werden.

Im Sinne der vorliegenden Erfindung können ferner die nachfolgenden literaturbekannten Lackkoaguliermittel eingesetzt werden:
- Wäßrige Wachsdispersionen, die nach der Lehre der DE-C-27 58 873 bzw. DE-C-34 21 289 im wesentlichen aus Montanwachs, Carnaubawachs und/oder Paraffinabkömmlingen bestehen.
- Wäßrige Konzentrate von Ethylen-acrylsäure-copolymerisaten, die nach der Lehre der DE-A-38 10 166 aus 8 bis 25 Gew.-% Acrylsäureeinheiten und 92 bis 75 Gew.-% Ethyleneinheiten, bezogen auf die Säureform des Copolymerisats, bestehen und als Salz einer anorganischen oder organischen Base, vorzugsweise in Form von Alkalimetall-, Ammonium-, Amin- oder Alkanolaminsalzen, vorliegen.
- Wäßrige Talkumdispersionen, die nach der Lehre der EP-B-117 586, DE-A-34 05 451 und US-A-4 496 374 im wesentlichen aus Talkum, wasserlöslichen Polyhydroxyverbindungen und Zinkstearat bestehen.
- Wäßrige Tonerdedispersionen, die nach der Lehre der DE-C-38 17 251 Pseudoböhmit oder Böhmit-Tonerde (Al₂O₃) neben üblichen Schaumdrückern enthalten.

Zusammen mit oder anstelle von einer oder mehreren der oben genannten, üblicherweise in derartigen Koaguliermitteln enthaltenen Stoffe können in den Koaguliermitteln Polyethylenimine enthalten sein, die durch Protonierung oder Alkylierung kationisch modifiziert sind. Die Polyethylenimine sind entweder durch Protonierung oder Alkylierung, in der Regel durch Methylierung des Stickstoffs kationisch modifiziert, d.h. in die entsprechenden Ammoniumsalze überführt. Der Modifizierungsgrad ist dabei unterschiedlich und hängt ab vom neutralen Ausgangspolymeren, von der entsprechenden Säure zur Protonierung bzw. von dem entsprechenden Alkylierungsreagenz zur Alkylierung. Tertiäre Stickstoffatome derartiger Polymere werden nicht vollständig protoniert bzw. alkyliert. Es sind protonierte und/oder alkylierte, bevorzugt methylierte Polyethylenimine verwendbar, die Molekularmassen im Bereich von 5 x 10⁴ bis 5 x 10⁷, vorzugsweise im Bereich von 7,5 x 10⁴ bis 5 x 10⁶, aufweisen (vergleiche beispielsweise die DE-A-33 16 878).

In den Koaguliermitteln können auch Molybdate, insbesondere wasserlösliche Molybdatsalze, in bevorzugten Ausführungsformen der Erfindung Alkalimetall- und/oder Ammoniumsalze der Molybdänsäure und/oder Isopolymolybdänsäure anwesend sein. Von diesen sind die Natrium- oder Ammoniummolybdate, insbesondere Na₂MoO₄, besonders bevorzugt. Koaguliermittel, die neben anderen, in derartigen Mitteln üblichen Stoffen Natriummolybdate enthalten, sind in der Lage, Nebel auch solcher Lacktypen vollständig zu entkleben und zu entsorgen, deren Behandlung mit Koaguliermitteln aus dem Stand der Technik als problematisch, wenn nicht sogar als unmöglich angesehen worden war (vergleiche die DE-A-40 25 729).

Auch wenn mit Koaguliermitteln, die in ihrer Zusammensetzung der obigen Beschreibung entsprechen, hervorragende Ergebnisse erzielt werden können, so ist es grundsätzlich darüber hinaus möglich, besonderen Anforderungen dadurch Rechnung zu tragen, daß man ihnen zusätzlich weitere übliche Wirkstoffe und/oder Hilfsstoffe zusetzt. Die Koaguliermittel können beispielsweise die aus der DE-A-34 12 763 bekannten Stoffe, wie Cyanamid und/oder Dicyandiamid und/oder Cyanamid-Salze, enthalten. Eine äußerst wirksame Koagulierung von Lacken und anderen organischen Beschichtungsmitteln, insbesondere von Zweikomponenten-Polyurethanlacken, gelingt bei Verwendung von Cyanamid oder Dicyandiamid (1-Cyanoguanidin), wenn sie im Umlaufwasser von Lackspritzkabinen, also in wäßriger Lösung, bei pH-Werten zwischen 3 und 12, bevorzugt zwischen 6,5 und 8,5, enthalten sind.

Weitere spezielle Anforderungen an die Lackkoaguliermittel können z.B. die Einstellung eines bestimmten pH-Wertes oder die antimikrobielle Ausrüstung der Koaguliermittel sein. Ein geeigneter Zusatz für diesen Zweck ist beispielsweise Borsäure, die antimikrobielle Wirkung besitzt und gegebenenfalls auch zur pH-Wert-Einstellung beitragen kann. Der pH-Wert-Einstellung dienen gegebenenfalls Zusätze von Phosphorsäure, organischen Säuren, wie Citronensäure, oder anderen, nicht korrosiven Säuren bzw. deren sauren Salzen. Zur pH-Wert Einstellung von sauren Lösungen werden basische Verbindungen, wie Alkalimetallhydroxide, Amine oder Alkanolamine, bevorzugt eingesetzt. Zusätzlich oder stattdessen können auch Biozide eingesetzt werden. Beispielhaft dafür sind Formaldehyd, Isothiazoline und deren Derivate sowie Pyridin-N-oxid und dessen Derivate zu nennen.

Als weitere mögliche Bestandteile der Koaguliermittel kommen auch Korrosionsinhibitoren und zusätzliche Antischaummittel in Frage. Als Korrosionsinhibitoren werden wasserlösliche Salze von Phosphonsäuren und Zinksalze, bevorzugt das Natriumsalz der 2-Phosphonobutan-1.2.4-tricarbonsäure oder das Zinksalz des 2-Pyridinthiol-1-oxids verwendet. Als Antischaummittel hat sich neben den für diesen Zweck aus dem Stand der Technik bekannten Mitteln das Dehydran F^{R} (Henkel KGaA) bewährt.

Gemäß einer bevorzugten Ausführungsform der vorliegenden Erfindung enthalten die verwendeten Lackkoagulierungsmittel mindestens eine der nachfolgend genannten Komponenten a) bis h) als Wirkstoffe:
a) Schichtsilicate, vorzugsweise aus der Gruppe der Montmorillonite, Bentonite, Hectorite oder Kaoline,
b) Wachse, vorzugsweise in Form einer wäßrigen Dispersion,
c) Ethylen-acrylsäure-copolymerisate, die 8 bis 25 Gew.-% Acrylsäureeinheiten und 92 bis 75 Gew.-% Ethyleneinheiten, bezogen auf die Säureform des Copolymerisats, aufweisen und als Salz einer anorganischen oder organischen Base vorliegen, vorzugsweise in Form eines wäßrigen Konzentrats,
d) Talkum,
e) Tonerde,
f) Polyethylenimine und/oder protonierte oder alkylierte Derivate des Polyethylenimins,
g) wasserlösliche Alkalimetall- und/oder Ammoniumsalze der Molybdänsäure und/oder Isopolymolybdänsäure und
h) Polyelektrolyte auf der Basis quaternärer Methacrylsäureester, beispielsweise solche der ROHAFLOC^{R}-Reihe (Röhm GmbH).

In einer weiteren bevorzugten Ausführungsform der vorliegenden Erfindung enthalten die oben genannten Koaguliermittel zusätzlich mindestens eine der nachfolgend genannten Komponenten i) bis k):
i) eine Verbindung aus der Gruppe Cyanamid, Dicyandiamid oder der Cyanamid-Salze, vorzugsweise Dicyandiamid,
j) ein Hydroxid, Carbonat oder Hydrogencarbonat der Alkalimetalle,
k) in Lack-Koaguliermitteln übliche Wirk- und/oder Hilfsstoffe, vorzugsweise Biozide, pH-regulierende Stoffe, Korrosionsinhibitoren, Antischaummittel oder Solubilisierungsmittel.

Die Herstellung der Lackkoaguliermittel aus den einzelnen Komponenten ist dem Fachmann aus dem Stand der Technik geläufig.

Die Dosierung der Koaguliermittel erfolgt entweder kontinuierlich mittels geeigneter, gegebenenfalls automatisierbarer Dosiergeräte oder diskontinuierlich, z.B. einmal pro Tag. Dabei werden dem Umlaufwasser die Koaguliermittel in einer Menge von 0,5 bis 40 Gew.%, vorzugsweise von 1,0 bis 10 Gew.%, an Aktivsubstanz - jeweils bezogen auf Lackoverspray - zugesetzt. In diesem Zusammenhang bezieht sich der Begriff "Aktivsubstanz" ausschließlich auf die genannten, koagulierend wirkenden Agenzien, nicht jedoch auf Hilfsstoffe, denen selbst keine koagulierende Wirksamkeit zukommt. Im Rahmen der Erfindung ist es ferner bevorzugt, die Einsatzmengen der Koaguliermittel so zu wählen, daß diese bei Festprodukten im Bereich von 1 bis 10 Gew.%, bei Flüssigprodukten im Bereich von 3 bis 30 Gew.%, jeweils wieder berechnet als Aktivsubstanz bezogen auf Lackoverspray, liegen. Die Konzentration an Aktivsubstanz im Umlaufwasser sollte vorzugsweise in einer Größenordnung von ca. 1 bis 3 g/l liegen. Insgesamt muß bei der Dosierung sichergestellt sein, daß genügend Koaguliermittel in den Umlaufwässern enthalten ist, um eine vollständige Entklebung der Lackpartikel sicherzustellen.

Bei der Durchführung des erfindungsgemäßen Verfahrens kann der pH-Wert des Umlaufwassers in einem breiten Bereich schwanken, beispielsweise im pH-Bereich von 2 bis 12. Erfindungsgemäß bevorzugt ist jedoch der pH-Bereich von 5 bis 9, insbesondere von 6 bis 8,5.

Im Sinne der vorliegenden Erfindung kann die Einstellung der Wasserhärte des Umlaufwassers generell in der Weise erfolgen, daß man als Umlaufwasser von vornherein ein entsprechend "weiches" Wasser einsetzt, welches bereits Wasserhärte-Werte im angegebenen Bereich aufweist. Derartige "weiche" Wässer stehen - je nach den örtlichen Gegebenheiten - entweder bereits in Form natürlicher Gewässer (Brauchwässer) zur Verfügung oder können mit Hilfe von aus dem Stand der Technik bekannten Maßnahmen durch Enthärtung "harter" Wässer, beispielsweise durch Entionisierung derselben, gewonnen werden. Hierzu wird auf die einschlägige Literatur des Standes der Technik, beispielsweise auf das bereits vorstehend zitierte "Römpp Chemie Lexikon", verwiesen.

Eine derartige Aufbereitung "harter" Wässer kann jedoch - insbesondere im Hinblick auf den hier vorgesehenen Verwendungszweck - sehr kostenintensiv sein, so daß eine solche Möglichkeit für den Anwender des erfindungsgemäßen Verfahrens in der Regel nicht akzeptabel ist. Im Hinblick hierauf besteht eine weitere bevorzugte Ausführungsform der vorliegenden Erfindung darin, daß man die Wasserhärte des Umlaufwassers durch Zugabe von sogenannten "Härtebindern" zum Umlaufwasser auf Werte in den angegebenen Bereichen einstellt.

In diesem Zusammenhang werden im Sinne der vorliegenden Erfindung unter "Härtebinder" generell solche Substanzen verstanden, die eine Verminderung der Wasserhärte des Umlaufwassers auf Werte in den angegebenen Bereichen - sei es durch Ausfällung der für die Wasserhärte verantwortlichen Erdalkalimetall-Ionen oder aber durch Komplexierung derselben - ermöglichen.

So können im Sinne der vorliegenden Erfindung als Härtbinder beispielsweise die nachfolgend genannten Substanzen Verwendung finden: Alkalimetallhydroxide, Alkalimetallcarbonate, Alkalimetallhydrogencarbonate, Alkalimetallsilicate, Alkalimetallphosphate, Alkalimetallpolyphosphate, Komplexbildner für Erdalkalimetallionen und/oder Ionenaustauscher, die Erdalkalimetallionen zu binden vermögen. Wenn im Zusammenhang mit der vorstehenden Aufzählung von Alkalimetallen die Rede ist, so werden erfindungsgemäß hierunter Natrium und/oder Calium, insbesondere jedoch Natrium verstanden. Beispielhaft für die vorstehend genannten Verbindungen seien hier genannt:
Natronlauge, Kalilauge, Soda, Natriumhydrogencarbonat, Natronwasserglas, Natriumorthophosphat, Natriumpyrophosphat und Natriumtriphosphat (auch Natriumtripolyphosphat genannt). Als Komplexbildner kommen erfindungsgemäß alle diejenigen aus dem Stand der Technik bekannten Komplexbildner oder Sequestrierungsmittel in Frage, welche die Härtebildner des Wassers, vorzugsweise Calcium und/oder Magnesium, komplex zu binden vermögen. Beispielhaft für diese Verbindungsklasse seien hier genannt:
Natriumtriphosphat, zeolithische Alkalimetallaluminiumsilicate, z. B.
- Zeolith A (SASIL^{R}, Henkel KGaA) oder
- Zeolith X,
Aminopolycarbonsäuren, z. B.
- Nitrilotriessigsäure (NTA) oder
- Ethylendiamintetraessigsäure (EDTA),
Phosphonsäuren, z. B.
- Ethan-1-hydroxy-1,1-diphosphonsäure(EHDP),
- Amino-tris(methylenphosphonsäure) (ATMP) oder
- 2-Phosphonobutan-1,2,4-tricarbonsäure, sowie die wasserlöslichen Salze der genannten Säuren, insbesondere deren Natriumsalze.

Erfindungsgemäß werden bevorzugt die vorstehend genannten Komplexbildner oder Sequestrierungsmittel als Härtebinder eingesetzt.

Bezüglich der einzusetzenden Menge an Härtebindern lassen sich keine allgemein gültigen Aussagen machen, da die zuzusetzende Menge natürlich in erster Linie von der gegebenen Wasserhärte des als Umlaufwasser einzusetzenden Brauchwassers abhängig ist. Generell gilt hier die Regel, daß man dem Umlaufwasser so viel an Härtebindern zusetzt, als notwendig ist, um die Wasserhärte dieses Umlaufwassers auf Werte in den angegebenen Bereichen einzustellen. Im Einzelfall wird der Fachmann die hierfür notwendige Menge durch einfache Versuche ermitteln. Für die vorstehend angegebenen Komplexbildner reicht es in der Regel aus, das man diese Härtebinder in einer Menge von 0,05 bis 0,5 Gew.%, bezogen auf die Menge an Umlaufwasser, einsetzt.

Ferner hat sich gezeigt, daß auch bereits ein Zusatz an erdalkalimetallarmen Alkalimetall-Schichtsilicaten zum Umlaufwasser zu einer Reduzierung der Wasserhärte desselben führt. Derartige erdalkalimetallarme Alkalimetall-Schichtsilicate, die auch mit Vorteil als wirksames Koaguliermittel eingesetzt werden können, zählen somit in gewisser Weise gleichfalls zu den Härtebindern im Sinne der vorliegenden Erfindung. Jedoch reicht die härtebindende Kapazität derartiger Alkalkimetall-Schichtsilicate im allgemeinen nicht dazu aus, die Wasserhärte des Umlaufwassers auf Werte in den angegebenen Bereichen abzusenken.

Im Sinne der vorliegenden Erfindung ist es daher bevorzugt, daß man dem Umlaufwasser zusätzlich zu den Härtebindern erdalkalimetallarme Alkalimetall-Schichtsilicate zufügt. Dies läßt sich beispielsweise erreichen, indem man derartige Alkalimetall-Schichtsilicate als Koaguliermittel verwendet. Natürlich ist es im Sinne der vorliegenden Erfindung auch durchaus möglich, andere, der vorstehend genannten Koaguliermittel einzusetzen und die Wasserhärte des Umlaufwassers durch Zusatz von derartigen Alkalimetall-Schichtsilicaten und/oder anderen der genannten Härtebindern zu reduzieren.

Als erdalkalimetallarme Alkalimetall-Schichtsilicate kommen beispielsweise natürliche Alkali-Bentonite mit niederem Calciumgehalt (kleiner als 1,5 Gew.%) in Frage. Beispielsweise das Handelsprodukt Portaclay A 90, Quarzwerke GmbH, Frechen. Erfindungsgemäß ist es bevorzugt, solche Alkali-Schichtsilicate einzusetzen, die einen Gehalt von weniger als 2 Gew.% an Erdalkalimetallionen aufweisen.

Bevorzugt werden derartige erdalkalimetallarme Alkalimetall-Schichtsilicate in einer Menge von 0,5 bis 10 Gew.%, insbesondere 1 bis 4 Gew.%, bezogen auf Lackoverspray, eingesetzt.

Mit Hilfe des erfindungsgemäßen Verfahrens kann eine vollständige Entklebung der Lackpartikel in vorteilhafter Weise erreicht werden. Die entklebten Lackpartikel lassen sich zu kleinen Flocken agglomerieren, die nicht an den Wänden der Leitungen, Pumpen und Behältnisse anhaften, sondern in der Dispersion oder Suspension gleichmäßig verteilt sind und sich auch durch automatische Anlagen problemlos entsorgen lassen. Letzteres Erfordernis ist besonders vorteilhaft bei den zunehmend in Gebrauch kommenden automatischen Lackentsorgungslinien, die auf der Basis einer adsorptiven Entsorgung der Lackoversprays arbeiten (z. B. "ESKA"-Anlagen).

Derartige ESKA-Anlagen mit Teilstromentsorgung werden beispielsweise hergestellt von den Firmen Dürr, Eisenmann und Fläkt. Sie arbeiten in der Weise, daß die in das Umlaufwasser eingetragenen, entklebten Lackpartikel in Suspension verbleiben und erst in einem abgezweigten Teilstrom gezielt durch Zugabe von Flockungsmitteln ausgeflockt und entsorgt werden. Bei Durchführung des erfindungsgemäßen Verfahrens lassen sich die Lackkoagulate durch eine nachträgliche Zugabe von beispielsweise Calciumsalze (Calciumnitrat) problemlos wieder ausfällen bzw. ausflocken.

Die Erfindung wird durch die nachfolgenden Beispiele näher erläutert.

### Beispiele

### Verminderung der Wasserhärte durch Zusatz von Härtebindern

Zu Wässern mit Wasserhärten von 5°d sowie 16°d (entsprechend etwa 1/3,1 mmol/l Erdalkalimetallionen) der nachfolgenden Bezugsbeispiele 1 und 2 wurden jeweils die in Tabelle 1 genannten Härtebinder in einer Menge von 0,1 Gew.-% entsprechend den Beispielen 1 bis 6 zugesetzt.

Die nachfolgende Tabelle 1 gibt die Veränderung der Härte nach Zusatz der jeweils genannten Härtebinder wieder, die Werte der Bezugsbeispiele 1 und 2 zeigen die Wasserhärten der eingesetzten Wässer ohne Zusatz.

**Tabelle 1**

| Beispiele | Gesamthärte [°d] | Calciumgehalt [mg/l] | Magnesiumgehalt [mg/l] |
|---|---|---|---|
| | | | |
| Bezugsb. 1 | 5 | 30 | 3,0 |
| 1* | 3,2 | 18,8 | 2,4 |
| 2** | 3,8 | 22,2 | 3,2 |
| 3*** | <1 | 0,1 | 0,1 |
| 4**** | <1 | <0,1 | <0,1 |
| | | | |
| Bezugsb. 2 | 16 | 94 | 12,3 |
| Vgl. 1* | 12,7 | - | - |
| Vgl. 2** | 11,5 | 61 | 12,9 |
| 5*** | 4,0 | 11,4 | 10,2 |
| 6**** | 2,9 | 10,1 | 6,5 |

| | | | |
|---|---|---|---|
| *Als Härtebinder diente ein natürlicher Natriumbentonit (Portaclay^{R} A90, Quarzwerke GmbH, Frechen) | | | |
| **Als Härtebinder diente Natriumtriphosphat | | | |
| ***Als Härtebinder diente ein Natriumaluminiumsilikat (Wessalith^{R}P, DEGUSSA AG) | | | |
| ****Als Härtebinder diente ein Natriumaluminiumsilikat (Zeolith X) | | | |

### Ausfällung bei verschiedenen Wasserhärten

Die Untersuchung der Ausfällung eines Wasserlacks (BASF, gletscherblau, Konzentration 5 g/l) in Wasser mit verschiedenen Härtegraden zeigte, daß bei sehr geringer Härte keine Koagulation erfolgte, während bereits bei mehr als 5°d ein Großteil der flockbaren Lackbestandteile ausfiel. Ab 10°d trat praktisch eine vollständige Koagulation des Lackbindemittels ein, was daraus zu erkennen ist, daß auch bei höheren Härtegraden keine weitere Zunahme des Sedimentvolumens erfolgte. Die Bestimmung des Sedimentvolumens erfolgte mit Hilfe eines Imhoff-Trichters. Hierbei handelt es sich um ein spitzwinkliges, kegelförmiges Glasgefäß mit einem Volumen von 1 l und exakten Volumenmarkierungen. Nach dem Einfüllen der zuvor homogenisierten Lösungen in den Imhoff-Trichter wurde nach bestimmten Zeitabständen jeweils das Volumen des Sediments abgelesen.

Die nachfolgende Tabelle 2 gibt die erhaltenen Daten wieder.

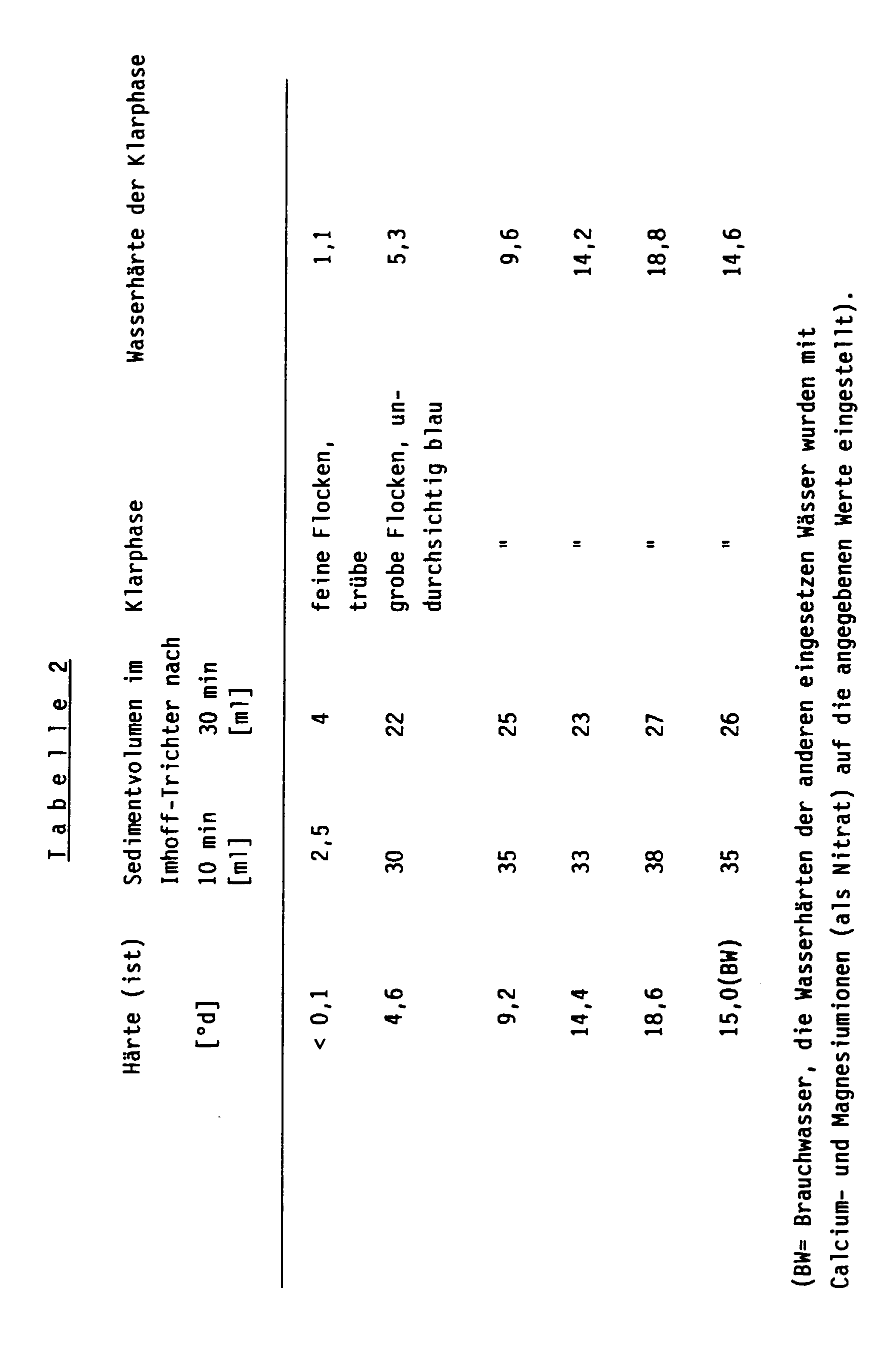

### Verhinderung der Koagulatausfällung durch Zusatz von Härtebindern

Zu Wasser einer Härte von 15°d wurden die in Tabelle 3 genannten Härtebinder gegeben. Anschließend wurde ein Wasserlack (BASF, gletscherblau) in einer Konzentration von 5g/l zugegeben und 10 min bei 250 U/min gerührt.

Die nachfolgende Tabelle 3 gibt die erhaltenen Daten wieder.

Hierbei gilt:

| | |
|---|---|
| Sasil^{R} = | Zeolith NaA (Henkel KGaA) |
| Zeolith X | (Henkel KGaA) |
| Portaclay^{R} A 90 = | Natriumbentonit (Quarzwerke GmbH) |
| Trilon^{R} A = | Nitrilotriessigsäure-Natriumsalz (NTA) |
| Aktiv-Bentonit = | mit Natriumcarbonat aktivierter Calcium-Bentonit (Erbslöh) |

* Zu diesen Versuchen ist folgendes anzumerken: Im Falle von NTA werden die Kationen zwar komplexiert, werden aber dennoch von der angewandten Analysenmethode (Atomabsorptionsspektrometrie) erfaßt. Somit sind die in Tabelle 3 angegebenen Härte-Werte nicht repräsentativ für die Wirkung von NTA im Sinne der vorliegenden Erfindung; ein genaueres Bild vermitteln hier die zum Sedimentvolumen angegebenen Werte.

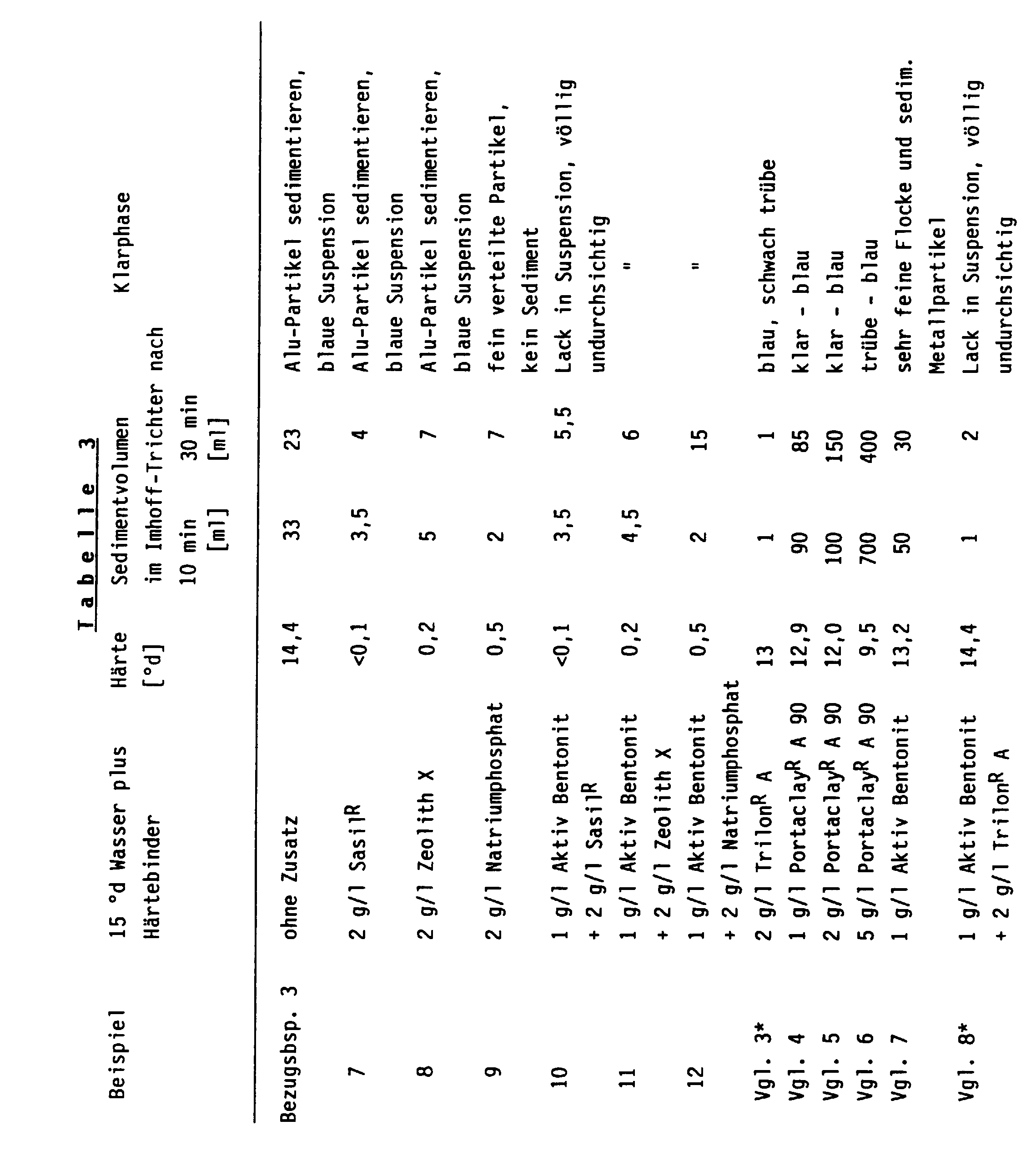

### Ausflockung der Suspension

Durch Zugabe eines Überschusses von wasserlöslichem Calciumnitrat konnte infolge der Anhebung der Wasserhärte die Suspension des Wasserlacks in sämtlichen Beispielen ausgeflockt werden.

## Patentansprüche

1. Verfahren zur Entklebung und Koagulierung von Lacken und sonstigen organischen Beschichtungsmitteln, insbesondere von Lacksystemen auf Wasserbasis ("Hasserlacken"), in Umlaufwässern von Naßabscheidern für Spritzlackieranlagen, wobei man dem Umlaufwasser an sich bekannte Lackkoaguliermittel zusetzt, dadurch gekennzeichnet, daß man den Härtebereich des Umlaufwassers auf Werte im Bereich von 0 bis 1,0 mmol/l Erdalkalimetallionenäquivalente einstellt.

2. Verfahren nach Anspruch 1, dadurch gekennzeichnet, daß man die Wasserhärte des Umlaufwassers auf Werte im Bereich von 0 bis 0,2 mmol/l dalkalimetallionenäquivalente einstellt.

3. Verfahren nach Anspruch 1 oder 2, dadurch gekennzeichnet, daß die Lackkoaguliermittel mindestens eine der nachfolgend genannten Komponenten a) bis h) als Wirkstoffe enthalten:
a) anorganische Schichtsilicate, vorzugsweise aus der Gruppe der Montmorillonite, Bentonite, Hectorite oder Kaoline,
b) Wachse, vorzugsweise in Form einer wäßrigen Dispersion
c) Ethylen-acrylsäurecopolymerisate, die 8 bis 25 Gew.% Acrylsäureeinheiten und 92 bis 75 Gew.% Ethyleneinheiten, bezogen auf die Säureform des Copolymerisats, aufweisen und als Salz einer anorganischen oder organischen Base vorliegen, vorzugsweise in Form eines wäßrigen Konzentrates,
d) Talkum,
e) Tonerde,
f) Polyethylenimine und/oder protonierte oder alkylierte Derivate des Polyethylenimins,
g) wasserlösliche Alkalimetall- und/oder Ammoniumsalze der Molybdänsäure und/oder Isopolymolybdänsäure und
h) Polyelektrolyte auf der Basis quaternärer Methacrylsäureester.

4. Verfahren nach Anspruch 3, dadurch gekennzeichnet, daß die Koaguliermittel zusätzlich mindestens eine der nachfolgend genannten Komponenten i) bis k) enthalten:
i) eine Verbindung aus der Gruppe Cyanamid, Dicyandiamid oder der Cyanamid-Salze, vorzugsweise Dicyandiamid,
j) ein Hydroxid, Carbonat oder Hydrogencarbonat der Alkalimetalle,
k) in Lack-Koaguliermitteln übliche Wirk- und/oder Hilfsstoffe, vorzugsweise Biozide, pH-regulierende Stoffe, Korrosionsinhibitoren, Antischaummittel oder Solubilisierungsmittel.

5. Verfahren nach einem oder mehreren der Ansprüche 1 bis 4, dadurch gekennzeichnet, daß man dem Umlaufwasser die Koaguliermittel in einer Menge von 0,5 bis 40 Gew.%, vorzugsweise von 1,0 bis 10 Gew.%, an Aktivsubstanz bezogen auf Lackoverspray zusetzt.

6. Verfahren nach einem oder mehreren der Ansprüche 1 bis 5, dadurch gekennzeichnet, daß der pH-Wert des Umlaufwassers im Bereich von 2 bis 12, vorzugsweise von 5 bis 9, liegt.

7. Verfahren nach einem oder mehreren der Ansprüche 1 bis 6, dadurch gekennzeichnet, daß man die Wasserhärte des Umlaufwassers durch Zusatz von Härtebindern einstellt.

8. Verfahren nach Anspruch 7, dadurch gekennzeichnet, daß man als Härtebinder Alkalimetallhydroxide, Alkalimetallcarbonate, Alkalimetallhydrogencarbonate, Alkalimetallsilikate, Alkalimetallphosphate, Komplexbildner für Erdalkalimetallionen und/oder Ionenaustauscher einsetzt.

9. Verfahren nach Anspruch 8, dadurch gekennzeichnet, daß man als Komplexbildner zeolithische Alkalimetallaluminiumsilicate, Aminopolycarbonsäuren, Phosphonsäuren und/oder wasserlösliche Salze der genannten Säuren einsetzt.

10. Verfahren nach Anspruch 7 oder 8, dadurch gekennzeichnet, daß man die Komplexbildner dem Umlaufwasser in einer Menge von 0,05 bis 0,5 Gew.%, bezogen auf die Menge an Umlaufwasser, zusetzt.

11. Verfahren nach einem oder mehreren der Ansprüche 1 bis 10, dadurch gekennzeichnet, daß man dem Umlaufwasser Härtebinder und erdalkalimetallarme Alkalimetall-Schichtsilicate zusetzt.

12. Verfahren nach Anspruch 11, dadurch gekennzeichnet, daß man Akalimetall-Schichtsilicate mit einem Gehalt von weniger als 2 Gew.% Erdalkalimetallionen einsetzt.

13. Verfahren nach Anspruch 11 oder 12, dadurch gekennzeichnet, daß man die Alkalimetall-Schichtsilicate in einer Menge von 0,5 bis 10 Gew.%, insbesondere 1 bis 4 Gew.%, bezogen auf Lackoverspray, einsetzt.

## Claims

1. A process for denaturing and coagulating paints and other organic coating materials, more particularly water-based paint systems ("water paints"), in circuit waters of wet separators for spray painting installations, paint coagulants known per se being added to the circuit water, characterized in that the hardness of the circuit water is adjusted to values of 0 to 1.0 mmole/l alkaline earth metal ion equivalents.

2. A process as claimed in claim 1, characterized in that the hardness of the circuit water is adjusted to values of 0 to 0.2 mmole/l alkaline earth metal ion equivalents.

3. A process as claimed in claim 1 or 2, characterized in that the paint coagulants contain at least one of the following components a) to h) as active constituents:
a) layer silicates, preferably from the group of montmorillonites, bentonites, hectorites or kaolins,
b) waxes, preferably in the form of an aqueous dispersion,
c) ethylene/acrylic acid copolymers which contain 8 to 25% by weight of acrylic acid units and 92 to 75% by weight of ethylene units, based on the acid form of the copolymer, and which are present as the salt of an inorganic or organic base, preferably in the form of an aqueous concentrate,
d) talcum,
e) alumina,
f) polyethylene imines and/or protonated or alkylated derivatives of polyethylene imine,
g) water-soluble alkali metal and/or ammonium salts of molybdic acid and/or isopolymolybdic acid and
h) polyelectrolytes based on quaternary methacrylates.

4. A process as claimed in claim 3, characterized in that the coagulants additionally contain at least one of the following components i) to k):
i) a compound from the group consisting of cyanamide, dicyanodiamide or cyanamide salts, preferably dicyanodiamide,
j) a hydroxide, carbonate or hydrogen carbonate of the alkali metals,
k) active substances and/or auxiliaries typical of paint coagulants, preferably biocides, pH regulators, corrosion inhibitors, antifoam agents or solubilizers.

5. A process as claimed in one or more of claims 1 to 4, characterized in that the coagulants are added to the circuit water in a quantity of 0.5 to 40% by weight and preferably 1.0 to 10% by weight of active substance, based on paint overspray.

6. A process as claimed in one or more of claims 1 to 5, characterized in that the pH value of the circuit water is in the range from 2 to 12 and preferably in the range from 5 to 9.

7. A process as claimed in one or more of claims 1 to 6, characterized in that the hardness of the circuit water is adjusted by addition of hardness binding agents.

8. A process as claimed in claim 7, characterized in that alkali metal hydroxides, alkali metal carbonates, alkali metal hydrogen carbonates, alkali metal silicates, alkali metal phosphates, complexing agents for alkaline earth metal ions and/or ion exchangers are used as the hardness binding agents.

9. A process as claimed in claim 8, characterized in that zeolitic alkali metal aluminium silicates, aminopolycarboxylic acids, phosphonic acids and/or water-soluble salts of the acids mentioned are used as the complexing agents.

10. A process as claimed in claim 7 or 8, characterized in that the complexing agents are added to the circuit water in a quantity of 0.05 to 0.5% by weight, based on the quantity of circuit water.

11. A process as claimed in one or more of claims 1 to 10, characterized in that hardness binding agents and alkali metal layer silicates poor in alkaline earth metals are added to the circuit water.

12. A process as claimed in claim 11, characterized in that alkali metal layer silicates containing less than 2% by weight of alkaline metal ions are used.

13. A process as claimed in claim 11 or 12, characterized in that the alkali metal layer silicates are used in a quantity of 0.5 to 10% by weight and more particularly in a quantity of 1 to 4% by weight, based on paint overspray.

## Revendications

1. Procédé de décollage et de coagulation de peintures, laques et autres agents d'enduction organiques, en particulier des systèmes de laques à base d'eau ("laques à l'eau"), dans les eaux de circulation des séparateurs humides pour les installations de pistolage, dans lequel on ajoute à l'eau de circulation des agents de coagulation connus en soi, caractérisé en ce que l'on ajuste la dureté de l'eau de circulation à des valeurs comprises dans l'intervalle de 0 à 1,0 mmole/l d'équivalents d'ions de métaux alcalino-terreux.

2. Procédé selon la revendication 1, caractérisé en ce que l'on ajuste la dureté de l'eau de circulation à des valeurs comprises dans l'intervalle de 0 à 0,2 mmole/l d'équivalents d'ions de métaux alcalino-terreux.

3. Procédé selon la revendication 1 ou 2, caractérisé en ce que les agents de coagulation des laques contiennent comme substances actives, au moins un des composants a) à h) énumérés ci-après:
a) silicates stratifiés, de préférence appartenant au groupe des montmorillonites, bentonites, hectorites ou kaolins,
b) cires, de préférence sous la forme d'une dispersion aqueuse,
c) copolymères d'éthylène-acide acrylique, qui comportent 8 à 25 % en poids d'unités d'acide acrylique et 92 à 75 % en poids d'unités d'éthylène, par rapport à la forme acide du copolymère, et qui sont présents sous la forme de sel d'une base inorganique ou organique, de préférence sous la forme d'un concentré aqueux,
d) talc,
e) alumine,
f) polyéthylènimines et/ou dérivés protonés ou alkylés de polyéthylènimine,
g) sels solubles dans l'eau de métal alcalin et/ou d'ammonium de l'acide molybdénique et/ou de l'acide isopolymolybdénique et
h) polyélectrolytes à base d'esters quaternaires de l'acide méthacrylique.

4. Procédé selon la revendication 3, caractérisé en ce que les agents de coagulation contiennent en plus au moins une des composants i) à k) cités ci-après:
i) un composé du groupe constitué du cyanamide, du dicyanodiamide ou des sels de cyanamide, de préférence le dicyanodiamide,
j) un hydroxyde, carbonate ou hydrogénocarbonate de métal alcalin,
k) des substances actives et/ou des adjuvants usuels dans les agents de coagulation des laques, de préférence des biocides, des régulateurs de pH, des inhibiteurs de corrosion, des agents antimousse ou des solubiliseurs.

5. Procédé selon une ou plusieurs des revendications 1 à 4, caractérisé en ce que l'on ajoute à l'eau de circulation les agents de coagulation dans une proportion de 0,5 à 40 % en poids, de préférence de 1,0 à 10 % en poids de substance active par rapport à l'overspray de laque.

6. Procédé selon une ou plusieurs des revendications 1 à 5, caractérisé en ce que le pH de l'eau de circulation se situe dans l'intervalle de 2 à 12, de préférence de 5 à 9.

7. Procédé selon une ou plusieurs des revendications 1 à 6, caractérisé en ce que l'on ajuste la dureté de l'eau de circulation par adjonction de fixateurs ou de neutralisateurs de la dureté.

8. Procédé selon la revendication 7, caractérisé en ce que l'on met en oeuvre comme fixateurs ou neutralisateurs de la dureté, des hydroxydes de métaux alcalins, des carbonates de métaux alcalins, des hydrogénocarbonates de métaux alcalins, des silicates de métaux alcalins, des phosphates de métaux alcalins, des agents complexants pour les ions de métaux alcalino-terreux et/ou des échangeurs d'ions.

9. Procédé selon la revendication 8, caractérisé en ce que l'on met en oeuvre comme agents complexants, des aluminosilicates de métaux alcalins zéolithiques, des acides aminopolycarboxyliques, des acides phosphoniques et/ou des sels solubles dans l'eau des acides cités.

10. Procédé selon la revendication 7 ou 8, caractérisé en ce que l'on ajoute les agents complexants à l'eau de circulation dans une proportion de 0,05 à 0,5 % en poids, par rapport à la quantité d'eau de circulation.

11. Procédé selon une ou plusieurs des revendications 1 à 10, caractérisé en ce que l'on ajoute à l'eau de circulation des fixateurs ou neutralisateurs de la dureté et des silicates stratifiés de métaux alcalins pauvres en métaux alcalino-terreux.

12. Procédé selon la revendication 11, caractérisé en ce que l'on met en oeuvre des silicates stratifiés de métaux alcalins possédant une teneur en ions de métaux alcalino-terreux inférieure à 2 % en poids.

13. Procédé selon la revendication 11 ou 12, caractérisé en ce que l'on met en oeuvre les silicates stratifiés de métaux alcalins dans une proportion de 0,5 à 10 % en poids, en particulier de 1 à 4 % en poids, par rapport à l'overspray de laque.
